# EUROPEAN PATENT SPECIFICATION

(11) **EP 3 699 764 B1**
(45) Date of publication and mention of the grant of the patent: **23.02.2022**
(21) Application number: 18869187.7
(22) Date of filing: 09.05.2018
(51) Int. Cl.: G06F 11/16, G06F 11/20

(54) **REDUNDANT ETHERNET-BASED SECURE COMPUTER SYSTEM**
REDUNDANTES ETHERNETBASIERTES SICHERES COMPUTERSYSTEM
SYSTÈME INFORMATIQUE SÉCURISÉ BASÉ SUR ETHERNET REDONDANT

(30) Priority: 19.10.2017 CN 201710976625
(43) Date of publication of application: 26.08.2020
(73) Proprietor: CRSC Research & Design Institute Group Co., Ltd., Beijing 100070 (CN)
(72) Inventor: LIU, Zhen, Beijing 100070 (CN); WANG, Hailong, Beijing 100070 (CN); ZHOU, Wei, Beijing 100070 (CN); WANG, Yimin, Beijing 100070 (CN); ZUO, Lin, Beijing 100070 (CN); GUO, Weiwei, Beijing 100070 (CN); HUANG, Yaqian, Beijing 100070 (CN); SUN, Chao, Beijing 100070 (CN); LIU, Xiaodong, Beijing 100070 (CN); AO, Qi, Beijing 100070 (CN); YE, Feng, Beijing 100070 (CN)
(74) Representative: Huang, Liwei
(86) International application number: PCT/CN2018/086115
(87) International publication number: WO 2019/076036

(56) References cited:
- WO-A1-2017/015251
- CN-A- 102 951 182
- CN-A- 103 176 870
- CN-A- 105 068 481
- CN-A- 105 739 299
- CN-A- 106 484 572
- CN-A- 107 967 194
- CN-B- 101 710 376
- JP-A- 2011 000 977

## Description

The present application claims priority to Chinese patent application with the application No. of 201710976625.5, filed on October 19, 2017 in China.

### TECHNICAL FIELD

The present application relates to a redundant Ethernet-based secure computer system, and pertains to the field of secure computer control.

### BACKGROUND

With the rapid development of the rail transportation industry, the secure computer system based on Double 2-vote-2 has been more and more widely used due to its good reliability and safety. The main technical advantages of the secure computer are reflected in aspects such as the use of the Double 2-vote-2 high-reliability redundant system architecture, the safe communication and fault-safe principle. At the same time, the 2-vote-2 manner avoids the system security problems caused by errors in data computing of a stand-alone per se, which can meet high safety requirements in railway, rail transportation, petrochemical and other fields.

The secure computer is a control system based on computer and communication, which embodies real-time control and safety protection of system operation. Thus, computing power and communication capacity of the system are particularly important. However, the secure computers used in the prior art generally have technical problems such as complex hardware, low computing power, and small communication capacity. Therefore, there is a need for a secure computer system with simple hardware structure, high computing power, large communication capacity, and appropriate control of communication capacity.

Document CN-A-105739299 discloses a redundant Ethernet-based secure computer system, wherein the system comprises a first system and a second system, the first system includes a first logic processing unit module and a first communication unit module, and the second system includes a second logic processing unit module and a second communication unit module. The first logic processing unit module and the second logic processing unit module adopt a dual-CPU symmetric redundancy architecture for achieving an intra-system dual-CPU data cross comparison function and an intersystem dual-CPU data synchronous comparison function. The first communication unit module and the second communication unit module are used for achieving a data transmission and data analysis function between the first logic processing unit module, the second logic processing unit module and external signal systems.

### SUMMARY

In view of the above technical defects existing in the prior art, the present disclosure provides a redundant Ethernet-based secure computer system.

The technical solution adopted by the present disclosure is: a redundant Ethernet-based secure computer system as defined in claim 1. Further preferred embodiments of the invention are defined in the dependent claims.

The first logic processing unit module and the second logic processing unit module are connected through redundant Ethernet; the first logic processing unit module and the first communication unit module are connected through multi-path Ethernet; the second logic processing unit module and the second communication unit module are connected through multi-path Ethernet; the first communication unit module and the second communication unit module each extend externally multiple Ethernet ports, for realizing communication connection between the first system, the second system and various types of external devices.

The beneficial effects produced by the technical solution of the present disclosure are: the present disclosure has simple hardware structure, high computing power, large communication capacity, and can appropriately control communication capacity, which solves the safety computing and safety control problems of the secure computers, and can be applied to the rail transportation secure computer platform and the secure computer platforms in other industry.

### BRIEF DESCRIPTION OF THE DRAWINGS

Figure 1 is a schematic diagram of overall structure of a secure computer system;
Figure 2 is a schematic diagram of internal hardware structure of a secure computer system;
Figure 3 is a schematic diagram of internal software structure of a secure computer system.

### DETAILED DESCRIPTION OF THE EMBODIMENTS

To further describe the present disclosure, the present disclosure will be further described below with reference to the drawings and specific embodiments.

The present disclosure provides a redundant Ethernet-based secure computer system, the system is divided into a first system and a second system, only one system is in the main control during a normal operation, the backup system is upgraded as the main system if the main system fails or is powered off, and the judgment of being main system or being backup system is carried out by communication between the two systems.

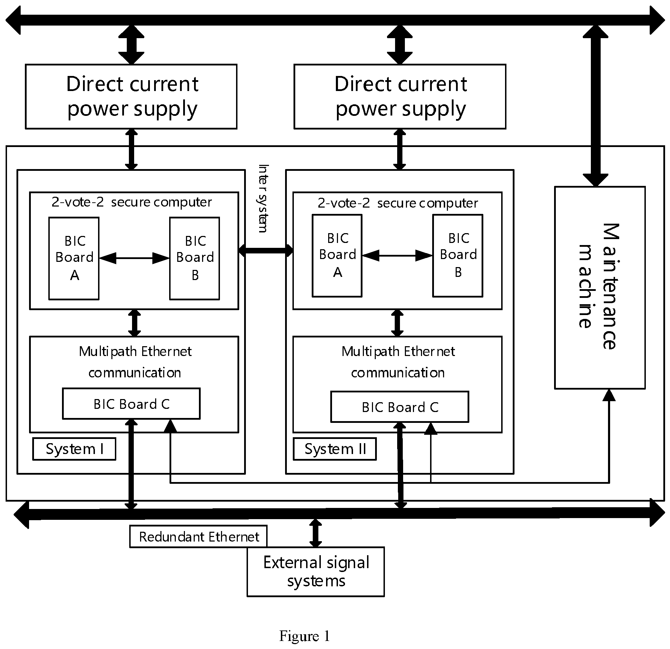

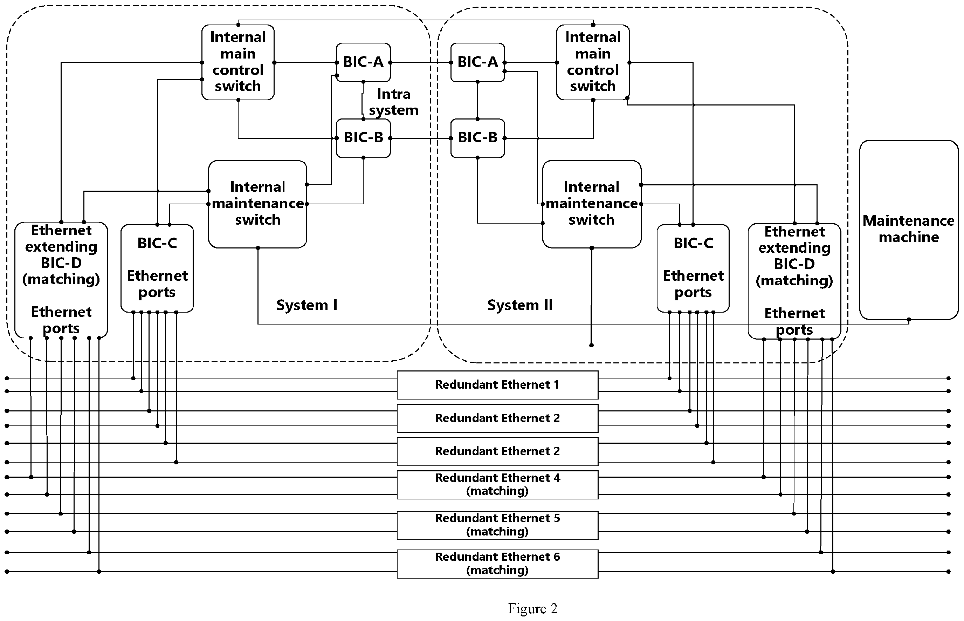

As shown in Figure 1 and Figure 2, the system includes a first system and a second system, the first system includes a first logic processing unit module and a first communication unit module, and the second system includes a second logic processing unit module and a second communication unit module. The first logic processing unit module and the second logic processing unit module adopt a dual-CPU symmetric redundancy architecture, for achieving an intrasystem dual-CPU data cross comparison function and an intersystem dual-CPU data synchronous comparison function. The first communication unit module and the second communication unit module are used for achieving a data transmission and data analysis function between the first logic processing unit module, the second logic processing unit module and external signal systems.

According to the invention, the first logic processing unit module and the second logic processing unit module are connected through redundant Ethernet, the first logic processing unit module and the first communication unit module are connected through multi-path Ethernet, the second logic processing unit module and the second communication unit module are connected through multi-path Ethernet, for increasing the system's communication capacity and data communication security function, and further improving the system's safety and reliability.

According to the invention, the first communication unit module and the second communication unit module each extend externally multiple Ethernet ports, for realizing communication connection between the first system, the second system and various types of external devices.

According to the invention, a Board of Intelligent Computation is set in each logic processing unit module to realize logic operation, cross comparison and data synchronization transmission or other functions of the input and output data and process data, a Board of Intelligent Computation is set in each communication unit module respectively to achieve the data analysis and transmission function or the like functions. The Board of Intelligent Computation is composed of modules such as a power module, a CPU minimum system module, an FPGA module, a PCIe clock module, an IO control module, a CFast card module, an Ethernet communication module, a serial communication module.

The Board of Intelligent Computation includes a CPU module and an Ethernet communication module, it combines the CPU board and the Ethernet board together. The same hardware design is adopted for Board of Intelligent Computation in the logic processing unit module and the communication unit module. For the entire system, the hardware structure is simple, meanwhile the computing power of the system is improved.

Further, the first logic processing unit module includes a first system Board of Intelligent Computation Board A and a first system Board of Intelligent Computation Board B, a first system CPU1 is disposed inside the first system Board of Intelligent Computation Board A, a first system CPU2 is disposed inside the first system Board of Intelligent Computation Board B. Both the first system Board of Intelligent Computation Board A and the first system Board of Intelligent Computation Board B are provided with multiple Ethernet ports.

The second logic processing unit module includes a second system Board of Intelligent Computation Board A and a second system Board of Intelligent Computation Board B, a second system CPU1 is disposed inside the second system Board of Intelligent Computation Board A, a second system CPU2 is disposed inside the second system Board of Intelligent Computation Board B. Both the second system Board of Intelligent Computation Board A and the second system Board of Intelligent Computation Board B are provided with multiple Ethernet ports.

Further, the first system Board of Intelligent Computation Board A and the first system Board of Intelligent Computation Board B are connected via Ethernet, the second system Board of Intelligent Computation Board A and the second system Board of Intelligent Computation Board B are connected via Ethernet, for realizing an intrasystem dual-CPU data cross comparison function.

As can be easily understood, the first system CPU1 and first system CPU2 are connected via Ethernet, the second system CPU1 and the second system CPU2 are connected via Ethernet, for realizing an intrasystem dual-CPU data cross comparison function.

Further, the first system Board of Intelligent Computation Board A and the second system Board of Intelligent Computation Board A are connected via Ethernet, the first system Board of Intelligent Computation Board A and the second system Board of Intelligent Computation Board B are connected via Ethernet, for realizing an intersystem dual-CPU data synchronous comparison function.

As can be easily understood, the first system CPU1 and the second system CPU1 are connected via Ethernet, the first system CPU2 and the second system CPU2 are connected via Ethernet, for realizing an intersystem dual-CPU data synchronous comparison function.

Further, the first communication unit module includes a first system Board of Intelligent Computation Board C, a first system internal main control switch and a first system internal maintenance switch, a first system CPU3 is disposed inside the first system Board of Intelligent Computation Board C. The first system Board of Intelligent Computation C is provided with multiple Ethernet ports, so that it is able to extend externally three pairs of independent Ethernet ports, for implementing communication connection between the first system and multiple types of external devices. Three pairs of independent Ethernet ports are completely physically independent, and can be connected to safe and none-safe systems according to product needs, so as to achieve safe and non-safe isolation of system.

Further, the first system CPU3 is used to receive data sent by the first system CPU1 and the first system CPU2, and forward the data to external signal systems through multiple Ethernet ports.

The second communication unit module includes a second system Board of Intelligent Computation Board C, a second system internal main control switch and a second system internal maintenance switch, a second system CPU3 is disposed inside the second system Board of Intelligent Computation Board C. The second system Board of Intelligent Computation Board C is provided with multiple Ethernet ports, so that it is able to extend externally three pairs of independent Ethernet ports, for implementing a communication connection between the second system and multiple types of external devices. Three pairs of independent Ethernet ports are completely physically independent, and can be connected to safe and none-safe systems according to product needs, so as to achieve safe and non-safe isolation of system.

Further, the second system CPU3 is used to receive data sent by the second system CPU1 and the second system CPU2, and forward the data to external signal systems through multiple Ethernet ports.

In an embodiment, the first communication unit module further includes a first system Board of Intelligent Computation Board D for externally matching, extending multiple Ethernet ports, a first system CPU4 is disposed inside the first system Board of Intelligent Computation Board D.

The second communication unit module further includes a second system Board of Intelligent Computation Board D for externally matching, extending multiple Ethernet ports, a second system CPU4 is disposed inside the second system Board of Intelligent Computation Board D.

Further, the first system Board of Intelligent Computation Board D and the second system Board of Intelligent Computation Board D can each externally expand three pairs of independent Ethernet ports, for implementing communication connection between the first system, the second system and various types of external devices, and improving the communication ability of the system. Three pairs of independent Ethernet ports are completely physically independent, and can be connected to safe and none-safe systems according to product needs, so as to achieve safe and non-safe isolation of system.

In an embodiment, the first system internal main control switch and the second system internal main control switch are connected through multi-path Ethernet, for establishing multi-path redundant channel communication connection between the first logic processing unit module and the second logic processing unit module.

Further, the first system internal main control switch is connected to the first system Board of Intelligent Computation Board A, the first system Board of Intelligent Computation Board B and the first system Board of Intelligent Computation Board C via Ethernet respectively, for implementing communication among the first system CPU1, the first system CPU2 and the first system CPU3.

The second system internal main control switch is connected to the second system Board of Intelligent Computation Board A, the second system Board of Intelligent Computation Board B and the second system Board of Intelligent Computation Board C via Ethernet respectively, for implementing communication among the second system CPU1, the second system CPU2 and the second system CPU3.

Further, the first system internal maintenance switch is connected to the first system Board of Intelligent Computation Board A, the first system Board of Intelligent Computation Board B and the first system Board of Intelligent Computation Board C via Ethernet respectively, for achieving a communication function between the first system CPU1, the first system CPU2, the first system CPU3 and an external maintenance machine.

The second system internal maintenance switch is connected to the second system Board of Intelligent Computation Board A, the second system Board of Intelligent Computation Board B and the second system Board of Intelligent Computation Board C via Ethernet respectively, for achieving a communication function between the second system CPU1, the second system CPU2, the second system CPU3 and an external maintenance machine.

In an embodiment, the first system internal maintenance switch and the second system internal maintenance switch are connected to an external maintenance machine via Ethernet, for realizing a communication function between the first system, the second system and the external maintenance machine.

Further, the first system Board of Intelligent Computation Board D establishes a communication connection with the first system internal main control switch and the first system internal maintenance switch via Ethernet respectively; the second system Board of Intelligent Computation Board D establishes a communication connection with the second system internal main control switch and the second system internal maintenance switch via Ethernet respectively.

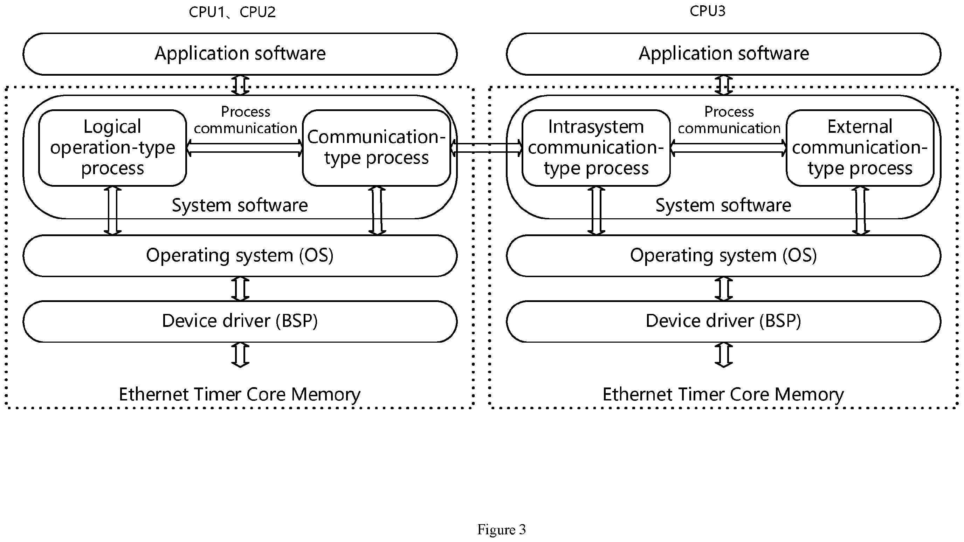

As shown in Figure 3, the first system CPU1, the first system CPU2, and the first system CPU3 each include an operating system layer and a device driver layer, Ethernet ports of the first system Board of Intelligent Computation Board A, Ethernet ports of the first system Board of Intelligent Computation Board B and Ethernet ports of the first system Board of Intelligent Computation Board C are respectively encapsulate-managed through the corresponding operating system layer and device driver layer;

The second system CPU1, the second system CPU2, and the second system CPU3 each include an operating system layer and a device driver layer, Ethernet ports of the second system Board of Intelligent Computation Board A, Ethernet ports of the second system Board of Intelligent Computation Board B and Ethernet ports of the second system Board of Intelligent Computation Board C are respectively encapsulate-managed through the corresponding operating system layer and device driver layer.

Further, the first system CPU1 and the first system CPU2, the second system CPU1 and the second system CPU2 are responsible for processing intrasystem and intersystem communication-type processes and logical operation-type processes; the first system CPU3 and the second system CPU3 are responsible for processing intrasystem communication-type processes and external communication-type processes. The logic operation-type processes realize a logic operation function of input and output data and process data, as well as an intrasystem dual-CPU data cross comparison function and an intersystem dual-CPU data synchronous comparison function; the intrasystem communication-type processes realize an information communication function inside a system; the external communication-type processes realize a communication function between interior of a system and an external signal system.

Further, the communication-type processes maintain the Ethernet communication link through the API provided by the operating system layer, and the logic operation-type processes interact with the Ethernet communication-type processes by way of sharing memory. The logic operation-type processes are also used to complete functions such as safety comparison, task management, and fault diagnosis. In addition, the platform provides various types of functional interface APIs to applications, based on these, the application software can complete various types of logical operations and secure communication functions.

The above is the preferred embodiments of the present disclosure. For those skilled in the art, several improvements can be made without departing from the principles of the present disclosure, and these improvements should also be regarded as falling into the protection scope of the appended claims.

## Claims

1. A redundant Ethernet-based secure computer system, wherein
the system comprises a first system and a second system, the first system includes a first logic processing unit module and a first communication unit module, and the second system includes a second logic processing unit module and a second communication unit module;
the first logic processing unit module and the second logic processing unit module adopt a dual-CPU symmetric redundancy architecture, for achieving an intrasystem dual-CPU data cross comparison function and an intersystem dual-CPU data synchronous comparison function; the first communication unit module is configured to achieve a data transmission and data analysis function between the first logic processing unit module and external signal systems, the second communication unit module is configured to achieve a data transmission and data analysis function between the second logic processing unit module and external signal systems;
wherein
the first logic processing unit module and the second logic processing unit module are connected through redundant Ethernet;
the first logic processing unit module and the first communication unit module are connected through multi-path Ethernet;
the second logic processing unit module and the second communication unit module are connected through multi-path Ethernet;
the first communication unit module and the second communication unit module each extend externally multiple Ethernet ports, for realizing a communication connection between the first system, the second system and various types of external devices;
wherein
the first logic processing unit module includes a first system Board of Intelligent Computation Board A and a first system Board of Intelligent Computation Board B, a first system CPU1 is disposed inside the first system Board of Intelligent Computation Board A, a first system CPU2 is disposed inside the first system Board of Intelligent Computation Board B; both the first system Board of Intelligent Computation Board A and the first system Board of Intelligent Computation Board B are provided with multiple Ethernet ports;
the second logic processing unit module includes a second system Board of Intelligent Computation Board A and a second system Board of Intelligent Computation Board B, a second system CPU1 is disposed inside the second system Board of Intelligent Computation Board A, a second system CPU2 is disposed inside the second system Board of Intelligent Computation Board B; both the second system Board of Intelligent Computation Board A and the second system Board of Intelligent Computation Board B are provided with multiple Ethernet ports;.
wherein
the first system Board of Intelligent Computation Board A and the first system Board of Intelligent Computation Board B are connected via Ethernet, the second system Board of Intelligent Computation Board A and the second system Board of Intelligent Computation Board B are connected via Ethernet, for realizing an intrasystem dual-CPU data cross comparison function;
the first system Board of Intelligent Computation Board A and the second system Board of Intelligent Computation Board A are connected via Ethernet, the first system Board of Intelligent Computation Board B and the second system Board of Intelligent Computation Board B are connected via Ethernet, for realizing an intersystem dual-CPU data synchronous comparison function.

2. The secure computer system according to claim 1, wherein
the first communication unit module includes a first system Board of Intelligent Computation Board C, a first system internal main control switch and a first system internal maintenance switch, a first system CPU3 is disposed inside the first system Board of Intelligent Computation Board C; the first system Board of Intelligent Computation Board C is provided with multiple Ethernet ports;
the second communication unit module includes a second system Board of Intelligent Computation Board C, a second system internal main control switch and a second system internal maintenance switch, a second system CPU3 is disposed inside the second system Board of Intelligent Computation Board C; the second system Board of Intelligent Computation Board C is provided with multiple Ethernet ports.

3. The secure computer system according to any one of claims 1 to 2, wherein
the first system internal main control switch and the second system internal main control switch are connected through multi-path Ethernet, for establishing a multi-path redundant channel communication connection between the first logic processing unit module and the second logic processing unit module.

4. The secure computer system according to any one of claims 1 to 3, wherein
the first system internal maintenance switch is connected to the first system Board of Intelligent Computation Board A, the first system Board of Intelligent Computation Board B and the first system Board of Intelligent Computation Board C via Ethernet respectively, for achieving a communication function between the first system CPU1, the first system CPU2, the first system CPU3 and an external maintenance machine;
the second system internal maintenance switch is connected to the second system Board of Intelligent Computation Board A, the second system Board of Intelligent Computation Board B and the second system Board of Intelligent Computation Board C via Ethernet respectively, for achieving a communication function between the second system CPU1, the second system CPU2, the second system CPU3 and an external maintenance machine.

5. The secure computer system according to any one of claims 1 to 4, wherein
the first system internal maintenance switch and the second system internal maintenance switch are connected to an external maintenance machine via Ethernet, for realizing a communication function between the first system, the second system and the external maintenance machine.

6. The secure computer system according to any one of claims 1 to 5, wherein
the first system Board of Intelligent Computation Board C and the second system Board of Intelligent Computation Board C can extend externally multiple Ethernet ports, for implementing communication connections between the first system, the second system and various types of external devices.

7. The secure computer system according to any one of claims 1 to 6, wherein
the first system Board of Intelligent Computation Board C and the second system Board of Intelligent Computation Board C can each extend externally three pairs of independent Ethernet ports.

8. The secure computer system according to any one of claims 1 to 7, wherein
the first communication unit module further includes a first system Board of Intelligent Computation Board D for externally matching, extending multiple Ethernet ports; a first system CPU4 is disposed inside the first system Board of Intelligent Computation Board D;
the second communication unit module further includes a second system Board of Intelligent Computation Board D for externally matching, extending multiple Ethernet ports; a second system CPU4 is disposed inside the second system Board of Intelligent Computation Board D.

9. The secure computer system according to any one of claims 1 to 8, wherein
the first system Board of Intelligent Computation Board D and the second system Board of Intelligent Computation Board D can each externally expand three pairs of independent Ethernet ports, for implementing a communication connection between the first system, the second system and various types of external devices.

10. The secure computer system according to any one of claims 1 to 9, wherein
the first system Board of Intelligent Computation Board D establishes communication connections with the first system internal main control switch and the first system internal maintenance switch via Ethernet respectively; the second system Board of Intelligent Computation Board D establishes communication connections with the second system internal main control switch and the second system internal maintenance switch via Ethernet respectively.

11. The secure computer system according to any one of claims 1 to 10, wherein
the first system CPU1, the first system CPU2, and the first system CPU3 each include an operating system layer and a device driver layer, Ethernet ports of the first system Board of Intelligent Computation Board A, Ethernet ports of the first system Board of Intelligent Computation Board B and Ethernet ports of the first system Board of Intelligent Computation Board C are respectively encapsulate-managed through the corresponding operating system layer and device driver layer;
the second system CPU1, the second system CPU2, and the second system CPU3 each include an operating system layer and a device driver layer, an Ethernet port of the second system Board of Intelligent Computation Board A, an Ethernet port of the second system Board of Intelligent Computation Board B and an Ethernet port of the second system Board of Intelligent Computation Board C are respectively encapsulate-managed through the corresponding operating system layer and device driver layer.

12. The secure computer system according to any one of claims 1 to 11, wherein
the first system CPU1 and the first system CPU2, the second system CPU1 and the second system CPU2 are responsible for processing intrasystem and intersystem communication-type processes and logical operation-type processes; the first system CPU3 and the second system CPU3 are responsible for processing intrasystem communication-type processes and external communication-type processes;
the logic operation-type processes realize a logic operation function of input and output data and process data, as well as an intrasystem dual-CPU data cross comparison function and an intersystem dual-CPU data synchronous comparison function;
the intrasystem communication-type processes realize an information communication function inside a system;
the external communication-type processes realize a communication function between interior of a system and external signal systems.

## Patentansprüche

1. Redundantes Ethernet-basiertes sicheres Computersystem, wobei
das System ein erstes System und ein zweites System umfasst, das erste System ein erstes Logikverarbeitungseinheitsmodul und ein erstes Kommunikationseinheitsmodul umfasst, und das zweite System ein zweites Logikverarbeitungseinheitsmodul und ein zweites Kommunikationseinheitsmodul umfasst;
das erste Logikverarbeitungseinheitsmodul und das zweite Logikverarbeitungseinheitsmodul eine Dual-CPU-symmetrische Redundanzarchitektur einführen, um eine Intrasystem-Dual-CPU-Datenquervergleichsfunktion und eine Intersystem-Dual-CPU-Datensynchronvergleichsfunktion zu erreichen; das erste Kommunikationseinheitsmodul konfiguriert ist, um eine Datenübertragungs- und Datenanalysefunktion zwischen dem ersten Logikverarbeitungseinheitsmodul und externen Signalsystemen zu erreichen, das zweite Kommunikationseinheitsmodul konfiguriert ist, um eine Datenübertragungs- und Datenanalysefunktion zwischen dem zweiten Logikverarbeitungseinheitsmodul und externen Signalsystemen zu erreichen;
wobei
das erste Logikverarbeitungseinheitsmodul und das zweite Logikverarbeitungseinheitsmodul über redundantes Ethernet verbunden sind;
das erste Logikverarbeitungseinheitsmodul und das erste Kommunikationseinheitsmodul über Mehrwege-Ethernet verbunden sind;
das zweite Logikverarbeitungseinheitsmodul und das zweite Kommunikationseinheitsmodul über Mehrwege-Ethernet verbunden sind;
das erste Kommunikationseinheitsmodul und das zweite Kommunikationseinheitsmodul jeweils extern mehrere Ethernet-Ports erweitern, um eine Kommunikationsverbindung zwischen dem ersten System, dem zweiten System und verschiedenen Typen von externen Vorrichtungen zu realisieren;
wobei
das erste Logikverarbeitungseinheitsmodul ein Board of Intelligent Computation Board A des ersten Systems und ein Board of Intelligent Computation Board B des ersten Systems enthält, eine CPU1 des ersten Systems innerhalb des Board of Intelligent Computation Board A des ersten Systems angeordnet ist, eine CPU2 des ersten Systems innerhalb des Board of Intelligent Computation Board B des ersten Systems angeordnet ist; sowohl das Board of Intelligent Computation Board A des ersten Systems als auch das Board of Intelligent Computation Board B des ersten Systems mit mehreren Ethernet-Ports versehen sind;
das zweite Logikverarbeitungseinheitsmodul ein Board of Intelligent Computation Board A des zweiten Systems und ein Board of Intelligent Computation Board B des zweiten Systems enthält, eine CPU1 des zweiten Systems innerhalb des Board of Intelligent Computation Board A des zweiten Systems angeordnet ist, eine CPU2 des zweiten Systems innerhalb des Board of Intelligent Computation Board B des zweiten Systems angeordnet ist; sowohl das Board of Intelligent Computation Board A des zweiten Systems als auch das Board of Intelligent Computation Board B des zweiten Systems mit mehreren Ethernet-Ports versehen sind;
wobei
das Board of Intelligent Computation Board A des ersten Systems und das Board of Intelligent Computation Board B des ersten Systems über Ethernet verbunden sind, das Board of Intelligent Computation Board A des zweiten Systems und das Board of Intelligent Computation Board B des zweiten Systems über Ethernet verbunden sind, um eine Intrasystem-Dual-CPU-Datenquervergleichsfunktion zu realisieren;
das Board of Intelligent Computation Board A des ersten Systems und das Board of Intelligent Computation Board A des zweiten Systems über Ethernet verbunden sind, das Board of Intelligent Computation Board B des ersten Systems und das Board of Intelligent Computation Board B des zweiten Systems über Ethernet verbunden sind, um eine Intersystem-Dual-CPU-Datensynchronvergleichsfunktion zu realisieren.

2. Sicheres Computersystem nach Anspruch 1, wobei
das erste Kommunikationseinheitsmodul ein Board of Intelligent Computation Board C des ersten Systems, einen ersten systeminternen Hauptsteuerschalter und einen ersten systeminternen Wartungsschalter enthält, eine CPU3 des ersten Systems innerhalb des Board of Intelligent Computation Board C des ersten Systems angeordnet ist; das Board of Intelligent Computation Board C des ersten Systems mit mehreren Ethernet-Ports versehen ist;
das zweite Kommunikationseinheitsmodul ein Board of Intelligent Computation Board C des zweiten Systems, einen zweiten systeminternen Hauptsteuerschalter und einen zweiten systeminternen Wartungsschalter enthält, eine CPU3 des zweiten Systems innerhalb des Board of Intelligent Computation Board C des zweiten Systems angeordnet ist; das Board of Intelligent Computation Board C des zweiten Systems mit mehreren Ethernet-Ports versehen ist.

3. Sicheres Computersystem nach einem der Ansprüche 1 bis 2, wobei
der erste systeminterne Hauptsteuerschalter und der zweite systeminterne Hauptsteuerschalter über Mehrwege-Ethernet verbunden sind, um eine Mehrwege-Redundanzkanalkommunikationsverbindung zwischen dem ersten Logikverarbeitungseinheitsmodul und dem zweiten Logikverarbeitungseinheitsmodul herzustellen.

4. Sicheres Computersystem nach einem der Ansprüche 1 bis 3, wobei
der erste systeminterne Wartungsschalter mit dem Board of Intelligent Computation Board A des ersten Systems, dem Board of Intelligent Computation Board B des ersten Systems bzw. dem Board of Intelligent Computation Board C des ersten Systems über Ethernet verbunden ist, um eine Kommunikationsfunktion zwischen der CPU1 des ersten Systems, der CPU2 des ersten Systems, der CPU3 des ersten Systems und einer externen Wartungsmaschine zu erreichen;
der zweite systeminterne Wartungsschalter mit dem Board of Intelligent Computation Board A des zweiten Systems, dem Board of Intelligent Computation Board B des zweiten Systems bzw. dem Board of Intelligent Computation Board C des zweiten Systems über Ethernet verbunden ist, um eine Kommunikationsfunktion zwischen der CPU1 des zweiten Systems, der CPU2 des zweiten Systems, der CPU3 des zweiten Systems und einer externen Wartungsmaschine zu erreichen.

5. Sicheres Computersystem nach einem der Ansprüche 1 bis 4, wobei
der erste systeminterne Wartungsschalter und der zweite systeminterne Wartungsschalter über Ethernet mit einer externen Wartungsmaschine verbunden sind, um eine Kommunikationsfunktion zwischen dem ersten System, dem zweiten System und der externen Wartungsmaschine zu realisieren.

6. Sicheres Computersystem nach einem der Ansprüche 1 bis 5, wobei
das Board of Intelligent Computation Board C des ersten Systems und das Board of Intelligent Computation Board C des zweiten Systems extern mehrere Ethernet-Ports erweitern können, um Kommunikationsverbindungen zwischen dem ersten System, dem zweiten System und verschiedenen Typen von externen Vorrichtungen zu implementieren.

7. Sicheres Computersystem nach einem der Ansprüche 1 bis 6, wobei
das Board of Intelligent Computation Board C des ersten Systems und das Board of Intelligent Computation Board C des zweiten Systems jeweils extern drei Paare unabhängiger Ethernet-Ports erweitern können.

8. Sicheres Computersystem nach einem der Ansprüche 1 bis 7, wobei
das erste Kommunikationseinheitsmodul ferner ein Board of Intelligent Computation Board D des ersten Systems zur externen Zuordnung enthält, wobei mehrere Ethernet-Ports erweitert werden; eine CPU4 des ersten Systems innerhalb des Board of Intelligent Computation Board D des ersten Systems angeordnet ist;
das zweite Kommunikationseinheitsmodul ferner ein Board of Intelligent Computation Board D des zweiten Systems zur externen Zuordnung enthält, wobei mehrere Ethernet-Ports erweitert werden; eine CPU4 des zweiten Systems innerhalb des Board of Intelligent Computation Board D des zweiten Systems angeordnet ist.

9. Sicheres Computersystem nach einem der Ansprüche 1 bis 8, wobei
das Board of Intelligent Computation Board D des ersten Systems und das Board of Intelligent Computation Board D des zweiten Systems jeweils extern drei Paare unabhängiger Ethernet-Ports erweitern können, um eine Kommunikationsverbindung zwischen dem ersten System, dem zweiten System und verschiedenen Typen von externen Vorrichtungen zu implementieren.

10. Sicheres Computersystem nach einem der Ansprüche 1 bis 9, wobei
das Board of Intelligent Computation Board D des ersten Systems Kommunikationsverbindungen mit dem ersten systeminternen Hauptsteuerschalter bzw. dem ersten systeminternen Wartungsschalter über Ethernet herstellt; das Board of Intelligent Computation Board D des zweiten Systems Kommunikationsverbindungen mit dem zweiten systeminternen Hauptsteuerschalter bzw. dem zweiten systeminternen Wartungsschalter über Ethernet herstellt.

11. Sicheres Computersystem nach einem der Ansprüche 1 bis 10, wobei
die CPU1 des ersten Systems, die CPU2 des ersten Systems und die CPU3 des ersten Systems jeweils eine Betriebssystemschicht und eine Vorrichtungstreiberschicht enthalten, Ethernet-Ports des Board of Intelligent Computation Board A des ersten Systems, Ethernet-Ports des Board of Intelligent Computation Board B des ersten Systems und Ethernet-Ports des Board of Intelligent Computation Board C des ersten Systems jeweils durch die entsprechende Betriebssystemschicht und Vorrichtungstreiberschicht gekapselt verwaltet werden;
die CPU1 des zweiten Systems, die CPU2 des zweiten Systems und die CPU3 des zweiten Systems jeweils eine Betriebssystemschicht und eine Vorrichtungstreiberschicht enthalten, ein Ethernet-Port des Board of Intelligent Computation Board A des zweiten Systems, ein Ethernet-Port des Board of Intelligent Computation Board B des zweiten Systems und ein Ethernet-Port des Board of Intelligent Computation Board C des zweiten Systems jeweils durch die entsprechende Betriebssystemschicht und Vorrichtungstreiberschicht gekapselt verwaltet werden.

12. Sicheres Computersystem nach einem der Ansprüche 1 bis 11, wobei
die CPU1 des ersten Systems und die CPU2 des ersten Systems, die CPU1 des zweiten Systems und die CPU2 des zweiten Systems für die Verarbeitung von Intrasystem- und Intersystem-Kommunikationstypprozessen und logischen Operationstypprozessen verantwortlich sind; die CPU3 des ersten Systems und die CPU3 des zweiten Systems für die Verarbeitung von Intrasystem-Kommunikationstypprozessen und externen Kommunikationstypprozessen verantwortlich sind;
die logischen Operationstypprozesse eine logische Operationsfunktion von Eingabe- und Ausgabedaten und Prozessdaten sowie eine Intrasystem-Dual-CPU-Datenquervergleichsfunktion und eine Intersystem-Dual-CPU-Datensynchronvergleichsfunktion realisieren;
die Intrasystem-Kommunikationstypprozesse eine Informationskommunikationsfunktion innerhalb eines Systems realisieren;
die externen Kommunikationstypprozesse eine Kommunikationsfunktion zwischen dem Inneren eines Systems und externen Signalsystemen realisieren.

## Revendications

1. Système informatique sécurisé basé sur Ethernet redondant, dans lequel
le système comprend un premier système et un deuxième système, le premier système comprend un premier module d'unité de traitement logique et un premier module d'unité de communication, et le deuxième système comprend un deuxième module d'unité de traitement logique et un deuxième module d'unité de communication ;
le premier module d'unité de traitement logique et le deuxième module d'unité de traitement logique adoptent une architecture de redondance symétrique à double CPU, pour réaliser une fonction de comparaison croisée de données intrasystème à double CPU et une fonction de comparaison synchrone de données intersystème à double CPU ; le premier module d'unité de communication est configuré pour réaliser une fonction de transmission de données et d'analyse de données entre le premier module d'unité de traitement logique et des systèmes de signaux externes, le deuxième module d'unité de communication est configuré pour réaliser une fonction de transmission de données et d'analyse de données entre le deuxième module d'unité de traitement logique et des systèmes de signaux externes ;
dans lequel
le premier module d'unité de traitement logique et le deuxième module d'unité de traitement logique sont connectés par Ethernet redondant ;
le premier module d'unité de traitement logique et le premier module d'unité de communication sont connectés par Ethernet multi-chemins ;
le deuxième module d'unité de traitement logique et le deuxième module d'unité de communication sont connectés par Ethernet multi-chemins ;
le premier module d'unité de communication et le deuxième module d'unité de communication déploient chacun vers l'extérieur de multiples ports Ethernet, pour réaliser une connexion de communication entre le premier système, le deuxième système et divers types de dispositifs externes ;
dans lequel
le premier module d'unité de traitement logique comprend une première carte système de carte de calcul intelligent A et une première carte système de carte de calcul intelligent B, un premier système CPU1 est disposé à l'intérieur de la première carte système de carte de calcul intelligent A, un premier système CPU2 est disposé à l'intérieur de la première carte système de carte de calcul intelligent B ; la première carte système de carte de calcul intelligent A et la première carte système de carte de calcul intelligent B sont toutes deux dotées de plusieurs ports Ethernet ;
le deuxième module d'unité de traitement logique comprend une deuxième carte système de carte de calcul intelligent A et une deuxième carte système de carte de calcul intelligent B, un deuxième système CPU1 est disposé à l'intérieur de la deuxième carte système de carte de calcul intelligent A, un deuxième système CPU2 est disposé à l'intérieur de la deuxième carte système de carte de calcul intelligent B ; la deuxième carte système de carte de calcul intelligent A et la deuxième carte système de carte de calcul intelligent B sont toutes deux dotées de plusieurs ports Ethernet;.
dans lequel
la première carte système de carte de calcul intelligent A et la première carte système de carte de calcul intelligent B sont connectées via Ethernet, la deuxième carte système de carte de calcul intelligent A et la deuxième carte système de carte de calcul intelligent B sont connectées via Ethernet, pour réaliser une fonction de comparaison croisée de données intrasystème à double CPU ;
la première carte système de carte de calcul intelligent A et la deuxième carte système de carte de calcul intelligent A sont connectées via Ethernet, la première carte système de carte de calcul intelligent B et la deuxième carte système de carte de calcul intelligent B sont connectées via Ethernet, pour réaliser une fonction de comparaison synchrone de données intersystème à double CPU.

2. Système informatique sécurisé selon la revendication 1, dans lequel
le premier module d'unité de communication comprend une première carte système de carte de calcul intelligent C, un commutateur de commande principal interne du premier système et un commutateur de maintenance interne du premier système, un premier système CPU3 est disposé à l'intérieur de la première carte système de carte de calcul intelligent C ; la première carte système de carte de calcul intelligent C est dotée de plusieurs ports Ethernet ;
le deuxième module d'unité de communication comprend une deuxième carte système de carte de calcul intelligent C, un interrupteur de commande principal interne du deuxième système et un deuxième interrupteur de maintenance interne système, un deuxième système CPU3 est disposé à l'intérieur de la deuxième carte système de carte de calcul intelligent C ; la deuxième carte système de carte de calcul intelligent C est dotée de plusieurs ports Ethernet.

3. Système informatique sécurisé selon l'une quelconque des revendications 1 à 2, dans lequel
le premier commutateur de commande principal interne système et le deuxième commutateur de commande principal interne système sont connectés via Ethernet multi-chemins, pour établir une connexion de communication de canal redondant multi-chemins entre le premier module d'unité de traitement logique et le deuxième module d'unité de traitement logique.

4. Système informatique sécurisé selon l'une quelconque des revendications 1 à 3, dans lequel
le premier commutateur de maintenance interne système est connecté à la première carte système de carte de calcul intelligent A, la première carte système de carte de calcul intelligent B et la première carte système de carte de calcul intelligente C via Ethernet respectivement, pour réaliser une fonction de communication entre le premier système CPU1, le premier système CPU2, le premier système CPU3 et une machine de maintenance externe ;
le deuxième commutateur de maintenance interne système est connecté à la deuxième carte système de carte de calcul intelligent A, la deuxième carte système de carte de calcul intelligent B et la deuxième carte système de carte de calcul intelligent C via Ethernet respectivement, pour réaliser une fonction de communication entre le deuxième système CPU1, le deuxième système CPU2, le deuxième système CPU3 et une machine de maintenance externe.

5. Système informatique sécurisé selon l'une quelconque des revendications 1 à 4, dans lequel
le premier interrupteur de maintenance interne système et le deuxième interrupteur de maintenance interne système sont connectés à une machine de maintenance externe via Ethernet, pour réaliser une fonction de communication entre le premier système, le deuxième système et la machine de maintenance externe.

6. Système informatique sécurisé selon l'une quelconque des revendications 1 à 5, dans lequel
la première carte système de carte de calcul intelligent C et la deuxième carte système de carte de calcul intelligent C peuvent déployer vers l'extérieur plusieurs ports Ethernet, pour établir des connexions de communication entre le premier système, le deuxième système et divers types de dispositifs externes.

7. Système informatique sécurisé selon l'une quelconque des revendications 1 à 6, dans lequel
la première carte système de carte de calcul intelligent C et la deuxième carte système de carte de calcul intelligent C peuvent chacune déployer vers l'extérieur trois paires de ports Ethernet indépendants.

8. Système informatique sécurisé selon l'une quelconque des revendications 1 à 7, dans lequel
le premier module d'unité de communication comprend en outre une première carte système de carte de calcul intelligent D pour l'appariement externe, déployant plusieurs ports Ethernet ; un premier système CPU4 est disposé à l'intérieur de la première carte système de carte de calcul intelligent D ;
le deuxième module d'unité de communication comprend en outre une deuxième carte système de carte de calcul intelligent D pour l'appartement externe, déployant plusieurs ports Ethernet ; un deuxième système CPU4 est disposé à l'intérieur de la deuxième carte système de carte de calcul intelligent D.

9. Système informatique sécurisé selon l'une quelconque des revendications 1 à 8, dans lequel
la première carte système de carte de calcul intelligent D et la deuxième carte système de carte de calcul intelligent D peuvent chacune déployer vers l'extérieur trois paires de ports Ethernet indépendants, pour établir une connexion de communication entre le premier système, le deuxième système et divers types de dispositifs externes.

10. Système informatique sécurisé selon l'une quelconque des revendications 1 à 9, dans lequel
la première carte système de carte de calcul intelligent D établit des connexions de communication avec le premier commutateur de commande principal interne système et le premier commutateur de maintenance interne système via Ethernet respectivement ; la deuxième carte système de carte de calcul intelligent D établit des connexions de communication avec le deuxième commutateur de commande principal interne système et le deuxième commutateur de maintenance interne système via Ethernet respectivement.

11. Système informatique sécurisé selon l'une quelconque des revendications 1 à 10, dans lequel
le premier système CPU1, le premier système CPU2 et le premier système CPU3 comprennent chacun une couche de système d'exploitation et une couche de pilote de périphérique, les ports Ethernet de la première carte système de carte de calcul intelligent A, les ports Ethernet de la première carte système de carte de calcul intelligent B et les ports Ethernet de la première carte système de carte de calcul intelligent C sont respectivement gérés par encapsulation via la couche de système d'exploitation et la couche de pilote de périphérique correspondantes ;
le deuxième système CPU1, le deuxième système CPU2 et le deuxième système CPU3 comprennent chacun une couche de système d'exploitation et une couche de pilote de périphérique, un port Ethernet de la deuxième carte système de carte de calcul intelligent A, un port Ethernet de la deuxième carte système de carte de calcul intelligent B et un port Ethernet de la deuxième carte système de la carte de calcul intelligente C sont respectivement gérés par encapsulation via la couche de système d'exploitation et la couche de pilote de périphérique correspondantes.

12. Système informatique sécurisé selon l'une quelconque des revendications 1 à 11, dans lequel
le premier système CPU1 et le premier système CPU2, le deuxième système CPU1 et le deuxième système CPU2 sont responsables du traitement des processus de type communication intrasystème et intersystème et des processus de type opération logique ; le premier système CPU3 et le deuxième système CPU3 sont responsables du traitement des processus de type communication intrasystème et des processus de type communication externe ;
les processus de type opération logique réalisent une fonction d'opération logique des données d'entrée et de sortie et des données de processus, ainsi qu'une fonction de comparaison croisée de données intrasystème à double CPU et une fonction de comparaison synchrone de données intersystème à double CPU ;
les processus de type communication intrasystème réalisent une fonction de communication d'informations à l'intérieur d'un système ;
les processus de type communication externe réalisent une fonction de communication entre l'intérieur d'un système et des systèmes de signaux externes.
